# EUROPEAN PATENT APPLICATION

(11) **EP 4 668 373 A1**
(43) Date of publication of application: **24.12.2025**
(21) Application number: 25183630.0
(22) Date of filing: 18.06.2025
(51) Int. Cl.: H01M 4/66, H01M 50/533, H01M 50/534, H01M 4/75

(54) **ELECTRODE AND SECONDARY BATTERY**

(30) Priority: 20.06.2024 KR 20240080341
(71) Applicant: SAMSUNG SDI CO., LTD., Yongin-si, Gyeonggi-do 17084 (KR)
(72) Inventor: MOON, Eun Jeong, Suwon-si 16678 (KR); SEO, Ye Jin, Suwon-si 16678 (KR)
(74) Representative: Marks & Clerk LLP

(57) **Abstract**

An electrode and a secondary battery are disclosed. An electrode includes a substrate, an active material layer on a portion of the substrate, and a connecting tab defining a substrate tab area by surrounding another portion of the substrate.

## Description

### BACKGROUND

### 1. Field

Aspects of embodiments of the present disclosure relate to an electrode and a secondary battery.

### 2. Discussion of Related Art

Secondary batteries are batteries that can be charged and discharged, unlike primary batteries that cannot be recharged. Low-capacity secondary batteries may be used in small portable electronic devices, such as smartphones, feature phones, notebook computers, digital cameras, and camcorders, while large-capacity secondary batteries are widely used as power sources for driving motors in hybrid vehicles, electric vehicles, and as power storage batteries. These secondary batteries include an electrode including a positive electrode and/or a negative electrode, an electrode assembly including the electrode, a case accommodating the electrode assembly, an electrode terminal connected to the electrode assembly, and the like.

As technology advances, higher capacity secondary batteries are required. Accordingly, a plurality of secondary batteries may be electrically connected and used. For example, the secondary battery may be applied to electronic devices in the form of a secondary battery module including a plurality of secondary batteries, and/or a battery pack including a plurality of secondary battery modules. Electronic devices include electronic devices that require high output and/or high capacity secondary batteries, such as electric vehicles.

The electrode assembly includes electrodes and a separator located between the electrodes. For example, the electrode assembly includes electrodes including a negative electrode and a positive electrode, and a separator disposed between the negative electrode and the positive electrode. Accordingly, the electrode assembly may be formed such that the negative electrode, the separator, and the positive electrode are alternately formed.

The electrode includes a substrate and an active material layer provided on at least one surface of the substrate.

For example, if the electrode is a positive electrode, the substrate includes, for example, aluminium (Al). For example, if the electrode is a negative electrode, the substrate includes, for example, copper (Cu). In this way, the electrode may include a metal as a substrate. This is because electrodes allow current to flow through the substrate.

However, if the substrate is formed only with a metal, there may be a problem that the secondary battery becomes heavy. In addition, for example, if the separator is damaged, a short circuit is more likely to occur between the negative electrode and the positive electrode if the substrate is made only of a metal.

The above-described information disclosed in the background technology of this invention is provided to improve understanding of the background of the present invention and therefore may include information that does not constitute the related art.

### SUMMARY

According to an aspect of embodiments of the present invention, an electrode and/or a secondary battery is provided including a composite substrate including a substrate including a metal and a polymer.

According to another aspect of embodiments of the present invention, an electrode and/or a secondary battery is provided that enables a metal-to-metal connection formed with a polymer therebetween in a composite substrate.

According to another aspect of embodiments of the present invention, an electrode and/or a secondary battery is provided in which a bending length can be reduced in a substrate tab area.

According to another aspect of embodiments of the present invention, an electrode and/or a secondary battery is provided capable of increasing a range of applicable thin film cells while improving safety.

However, aspects and technical problems to be achieved by the present invention are not limited to the above-mentioned aspects and problems, and other aspects and problems not mentioned will be clearly understood by those skilled in the art from the following description.

According to one or more embodiments of the present invention, an electrode includes a substrate, an active material layer on a portion of the substrate, and a connecting tab defining a substrate tab area by surrounding another portion of the substrate.

According to one or more embodiments of the present invention, a secondary battery includes an electrode assembly including an electrode including a substrate, an active material layer on a portion of the substrate, and a connecting tab defining a substrate tab area by surrounding another portion of the substrate, and a case accommodating the electrode assembly.

At least some of the above and other features of the invention are set out in the claims.

### BRIEF DESCRIPTION OF THE DRAWINGS

The following drawings attached to this specification illustrate some embodiments of the present invention and, together with the detailed description of the invention described below, are provided to further understanding of the technical idea of the present invention; however, the present invention is not to be construed as being limited to matters described in such drawings, in which:
FIGS. 1 and 2 are views schematically illustrating a secondary battery according to an embodiment of the present invention;
FIG. 3 is a cross-sectional view schematically illustrating a substrate according to an embodiment of the present invention;
FIG. 4 is a top view schematically illustrating an electrode to which a composite substrate is applied;
FIG. 5 is a cross-sectional view taken along the line A-A' shown in FIG. 4;
FIG. 6 is a drawing comparing an example of a lead tab attached to an electrode to which a general substrate is applied and an example of a lead tab attached to an electrode to which a composite substrate is applied;
FIG. 7 is a top view showing an electrode to which a composite substrate according to an embodiment of the present invention is applied;
FIGS. 8A and 8B are cross-sectional views taken along the lines B-B' and C-C' shown in FIG. 7, respectively;
FIG. 9 is a drawing comparing an example of a lead tab attached to an electrode to which a composite substrate is applied and an example of a lead tab attached to an electrode to which a composite substrate according to an embodiment of the present invention is applied;
FIG. 10 is a top view showing an electrode to which a composite substrate according to another embodiment of the present invention is applied;
FIG. 11A and 11B are cross-sectional views taken along the lines D-D' and E-E' shown in FIG. 10, respectively;
FIG. 12 is a top view showing an example of a lead tab attached to an electrode according to another embodiment of the present invention;
FIG. 13 is a top view showing an electrode to which a composite substrate according to another embodiment of the present invention is applied;
FIG. 14A and 14B are cross-sectional views taken along the lines F-F' and G-G' shown in FIG. 13, respectively; and
FIG. 15 is a top view showing an example of a lead tab attached to an electrode according to another embodiment of the present invention.

### DETAILED DESCRIPTION

Herein, some embodiments of the present invention will be described in further detail. However, the embodiments are presented as examples, and the present invention is not limited thereby and is defined by the scope of the claims.

Unless otherwise specified herein, when a part such as a layer, film, area, plate, and the like is described as being "on" another part, it includes not only a case in which the part is "directly on" the other part but also a case in which there is another part therebetween.

Unless otherwise specified in this specification, the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

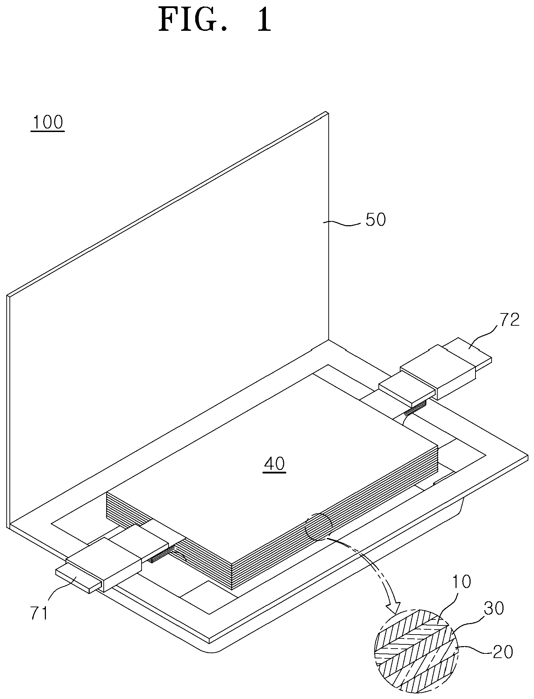

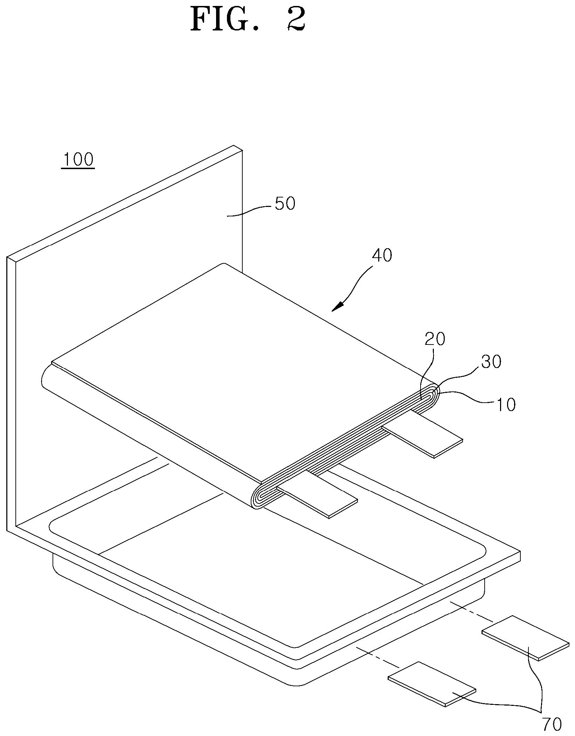

FIGS. 1 and 2 are views schematically illustrating a secondary battery according to an embodiment of the present invention.

### Secondary battery 100

A secondary battery 100 can be classified into any of cylindrical, prismatic, pouch-shaped, and coin-shaped batteries, etc., depending on a shape thereof. FIGS. 1 and 2 illustrate, for example, a pouch-shaped battery form. Referring to FIGS. 1 and 2, the secondary battery 100 may include an electrode assembly 40 in which a separator 30 is interposed between a positive electrode 10 and a negative electrode 20, and a case 50 into which the electrode assembly 40 is built or accomodated. The positive electrode 10, the negative electrode 20 and the separator 30 may be impregnated with an electrolyte (not shown). As shown in FIGS. 1 and 2, the secondary battery 100 may include an electrode tab 70, i.e., a positive electrode tab 71 and a negative electrode tab 72, which function as electrical paths for conducting current formed in the electrode assembly 40 to the outside.

### Positive electrode active material

As a positive electrode active material, a compound capable of reversible intercalation and deintercalation of lithium (lithiated intercalation compound) may be used. In an embodiment, at least one composite oxide of lithium and a metal selected from cobalt, manganese, nickel, and a combination thereof may be used.

The composite oxide may be a lithium transition metal composite oxide, and examples thereof include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fₑ₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high-nickel positive electrode active material in which a nickel content is 80 mol% or more, 85 mol% or more, 90 mol% or more, 91 mol% or more, or 94 mol% or more and 99 mol% or less, based on 100 mol% of metal excluding lithium in a lithium transition metal composite oxide. The high-nickel positive electrode active material can achieve high capacity and thus can be applied to high-capacity, high-density secondary batteries.

### Positive electrode 10

The positive electrode 10 for the secondary battery 100 may include a current collector and a positive electrode active material layer formed on the current collector. The positive electrode active material layer includes a positive electrode active material and may further include a binder and/or a conductive material.

For example, the positive electrode may further include an additive that may act as a sacrificial positive electrode.

In an embodiment, the content of the positive electrode active material may be 90 wt% to 99 wt% with respect to 100 wt% of the positive electrode active material layer, and the contents of the binder and conductive material may be 0.5 wt% to 5 wt%, respectively, based on 100 wt% of the positive electrode active material layer.

The binder functions to attach the positive electrode active material particles to each other well and also to attach the positive electrode active material to the current collector well. Representative examples of binders include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like.

The conductive material is used for imparting conductivity to an electrode, and any suitable material that does not cause chemical changes and is electronically conductive may be used in the battery being constructed. Examples of conductive materials include carbon-based materials, such as natural graphite, artificial graphite, carbon black, acetylene black, Ketjen black, carbon fibers, carbon nanofibers, and carbon nanotubes; metal-based materials containing copper, nickel, aluminium, and silver in the form of metal powder or metal fibers; conductive polymers, such as polyphenylene derivatives; or mixtures thereof.

In an embodiment, Al may be used as the current collector, but the present invention is not limited thereto.

### Negative electrode active material

A negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon include graphite, such as amorphous, platy, flaky, spherical or fibrous natural graphite or artificial graphite, and examples of the amorphous carbon include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles of which a surface is coated with amorphous carbon and, for example, may include a secondary particle (core) in which silicon primary particles are assembled and an amorphous carbon coating layer (shell) located on the surface of the secondary particle. In an embodiment, the amorphous carbon may be located between the silicon primary particles, such that, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in a combination with a carbon-based negative electrode active material.

### Negative electrode 20

The negative electrode 20 for the secondary battery 100 includes a current collector and a negative electrode active material layer located on the current collector. The negative electrode active material layer includes a negative electrode active material and may further include a binder and/or a conductive material.

For example, the negative electrode active material layer may include 90 to 99.5 wt% of the negative electrode active material, 0.5 to 5 wt% of the binder, and 0 to 5 wt% of the conductive material.

The binder functions to attach the negative electrode active material particles to each other well and also to attach the negative electrode active material to the current collector well. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenol resin, epoxy resin, polyvinyl alcohol, and combinations thereof.

If using an aqueous binder as the negative electrode binder, a cellulose-based compound capable of imparting viscosity may be further included. As the cellulose-based compound, one or more types, such as carboxymethyl cellulose, hydroxypropyl methyl cellulose, methyl cellulose, or alkali metal salts thereof may be used in combination. In an embodiment, as the alkali metal, Na, K, or Li may be used.

The dry binder is a polymeric material capable of fiberization, and may be, for example, polytetrafluoroethylene, polyvinylidene fluoride, a polyvinylidene fluoride-hexafluoropropylene copolymer, polyethylene oxide, or a combination thereof.

The conductive material is used for imparting conductivity to an electrode, and any suitable material that does not cause chemical changes and is electronically conductive may be used in the battery being constructed. Some examples include carbon-based materials, such as natural graphite, artificial graphite, carbon black, acetylene black, Ketjen black, carbon fibers, carbon nanofibers, and carbon nanotubes; metal-based materials containing copper, nickel, aluminium, and silver in the form of metal powder or metal fibers; conductive polymers, such as polyphenylene derivatives; or mixtures thereof.

In an embodiment, the negative electrode current collector may be selected from any of a copper foil, a nickel foil, a stainless steel foil, a titanium foil, a nickel foam, a copper foam, a polymer substrate coated with a conductive metal, and a combination thereof.

### Electrolyte (not shown)

An electrolyte for the secondary battery 100 includes a non-aqueous organic solvent and a lithium salt.

The non-aqueous organic solvent functions as a medium through which ions involved in the electrochemical reaction of the battery can move.

In an embodiment, the non-aqueous organic solvent may be a carbonate-based, ester-based, ether-based, ketone-based, or alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent include methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In an embodiment, cyclohexanone and the like may be used as the ketone-based solvent. Ethyl alcohol, isopropyl alcohol, and the like may be used as the alcohol-based solvent, and nitriles such as R-CN (where R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes, and the like may be used as the aprotic solvent.

The non-aqueous organic solvent may be used alone or in combination of two or more.

In addition, if using the carbonate-based solvent, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and acts as a source of lithium ions within the battery, enabling the basic operation of the battery cell and promoting the movement of lithium ions between the positive electrode and negative electrode. Representative examples of lithium salts may include one or two or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers from 1 to 20), lithium trifluoromethanesulfonate, lithium tetrafluoroethanesulfonate, lithium difluorobis(oxalato)phosphate (LiDFBOP), and lithium bis(oxalato)borate (LiBOB).

### Separator 30

Depending on a type of secondary battery 100, a separator 30 may be present between the positive electrode 10 and the negative electrode 20. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may be used.

The separator 30 may include a porous substrate, and a coating layer including an organic material, an inorganic material, or a combination thereof and located on one side or both, or ooposite, sides of the porous substrate.

The porous substrate may include a polymer film formed of at least one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyether imide, polyamide imide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or two or more copolymers or mixtures of the above.

In an embodiment, the organic material may include a polyvinylidene fluoride-based polymer or a (meth)acrylic polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be present in a mixed form in one coating layer or may be present in a form in which a coating layer including the organic material and a coating layer including the inorganic material are laminated.

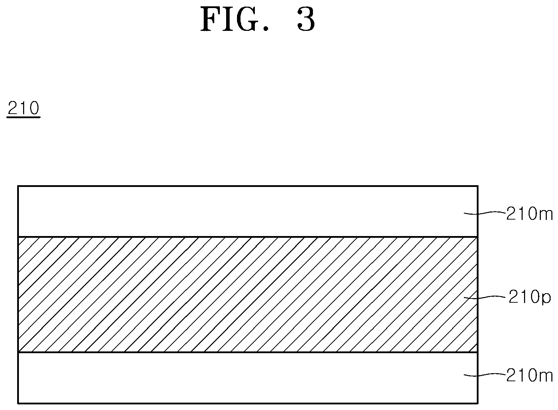

FIG. 3 is a cross-sectional view schematically showing a substrate according to an embodiment of the present invention.

In FIG. 3, 210 represents a substrate according to an embodiment of the present invention.

For example, the substrate 210 according to an embodiment of the present invention may function the same or similar to that of the current collector described in FIGS. 1 and 2.

For example, the substrate 210 allows current to flow through an electrode (e.g., including the positive electrode 10 or the negative electrode 20 described with respect to FIGS. 1 and 2). For example, the substrate 210 provides a path for electrons to travel to an active material layer formed on the substrate 210 (e.g., including the coating layer described with respect to FIGS. 1 and 2) through current conduction and/or current collection. For this purpose, the substrate 210 may include an electrically conductive material. In an embodiment, for example, the substrate 210 includes a metal.

However, if the substrate 210 includes only a metal, there may be a problem that the weight of the substrate 210 becomes excessively heavy. In addition, if the separator (e.g., including the separator 30 described with respect to FIGS. 1 and 2) located between the electrodes is damaged or shrinks, a short circuit may occur between the electrodes that were insulated by the separator.

One or more embodiments of the present invention are provided to avoid these problems.

An electrode according to an embodiment of the present invention (e.g., including the positive electrode 10 or negative electrode 20 described with respect to FIGS. 1 and 2) includes a substrate 210 and an active material layer (e.g., including the coating layer described with respect to FIGS. 1 and 2) provided on a portion of the substrate 210.

The substrate 210 according to an embodiment of the present invention may include an insulating layer 210p and a conductive layer 210m. Herein, the substrate 210 including the insulating layer 210p and the conductive layer 210m may be referred to as a composite substrate.

The insulating layer 210p enables a shape of the substrate 210 to be supported. The insulating layer 210p enables the substrate 210 to maintain its shape, for example, even if the conductive layer 210m is formed thinly.

In an embodiment, the insulating layer 210p may include a material having a lower density than the conductive layer 210m. Through this, the insulating layer 210p may enable weight reduction compared to if the substrate 210 were composed only of a conductive layer. For example, the insulating layer 210p includes an insulating material.

In an embodiment, the insulating material may include at least one selected from the group consisting of polymer materials and polymer composite materials.

In an embodiment, the polymer material is at least one selected from the group consisting of polyamide, polyterephthalate, polyimide, polyethylene, polypropylene, polystyrene, polyvinyl chloride, aramid, polyphthalamide, an acrylonitrile-butadiene-styrene copolymer, polybutylene terephthalate, polyparaphenylene terephthalamide, ethylene propylene rubber, polyoxymethylene, epoxy resin, phenol resin, polytetrafluoroethylene, polyphenylene sulfide, polyvinylidene fluoride, silicone rubber, polycarbonate, cellulose and derivatives thereof, starch and derivatives thereof, proteins and derivatives thereof, polyvinyl alcohol and crosslinked products thereof, and polyethylene glycol and crosslinked products thereof.

Polymer composite materials are composite materials including polymer materials and inorganic materials. Inorganic materials include, for example, ceramic materials, glass materials, ceramic composite materials, and the like.

The conductive layer 210m conducts and/or collects current in the substrate 210. Through this, the conductive layer 210m provides a path for electrons to move to the active material layer. Accordingly, the conductive layer 210m includes a conductive material.

In an embodiment, the conductive material may be at least one selected from the group consisting of metallic materials, carbon-based materials, and combinations thereof.

In an embodiment, the metallic material may be at least one selected from the group consisting of silver (Ag), copper (Cu), gold (Au), aluminium (Al), tungsten (W), zinc (Zn), nickel (Ni), iron (Fe), platinum (Pt), tin (Sn), and alloys of at least two or more of these.

At this time, the metallic material may be selected, for example, depending on the polarity of the electrode. For example, when the electrode is a positive electrode, the metallic material may include aluminium. For example, when the electrode is a negative electrode, the metallic material may include copper.

In an embodiment, the carbon-based material may be at least one selected from the group consisting of graphite, carbon nanotubes, and graphene.

The conductive layer 210m is provided on at least one surface of the insulating layer 210p. For example, the conductive layer 210m may be formed on one surface of the insulating layer 210p, or, for example, the conductive layer 210m may be formed on both, or opposite, surfaces of the insulating layer 210p. For example, the conductive layer 210m may include a first conductive layer formed on a surface of the insulating layer 210p and a second conductive layer formed on another surface of the insulating layer 210p. For example, as illustrated in FIG. 3, the first conductive layer and the second conductive layer may be insulated from each other by the insulating layer 210p.

In this way, the substrate 210 may reduce the total weight of the substrate 210 by including the insulating layer 210p that is relatively lighter than the conductive layer 210m. In addition, the substrate 210 may contribute to reducing a weight of the secondary battery 100.

Further, the substrate 210 may prevent or substantially prevent other components from penetrating the substrate 210 by including the insulating layer 210p. In an embodiment, the insulating layer 210p may have a greater elongation than the conductive layer 210m. Therefore, the substrate 210 may improve short-circuit resistance through the elongation of the insulating layer 210p located inside in a nail penetration test. In addition, the substrate 210 may improve safety by improving voltage drop and reducing resistance by including the insulating layer 210p. In an embodiment, the substrate 210 may improve the safety of the secondary battery 100.

Herein, electrodes to which these composite substrates are applied are described.

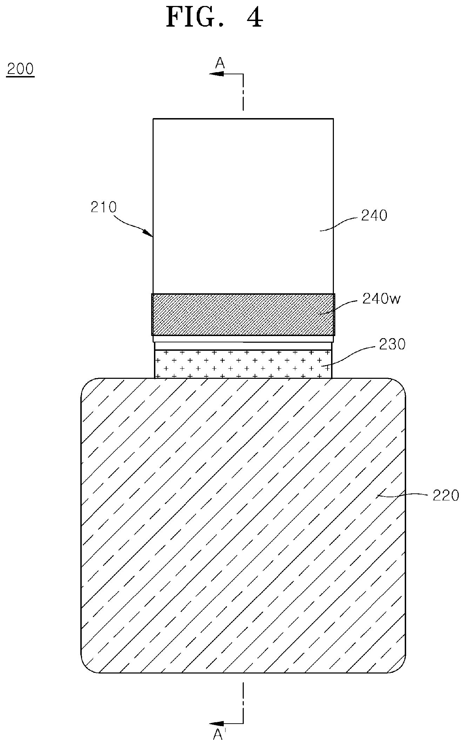

FIG. 4 is a top view schematically illustrating an electrode to which a composite substrate is applied.

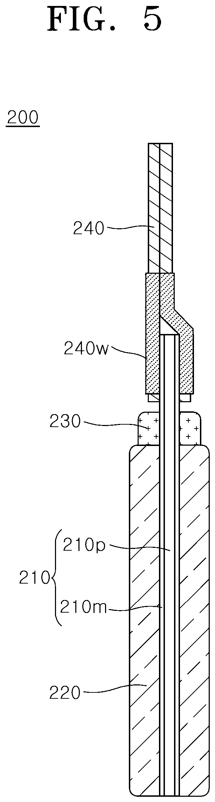

FIG. 5 is a cross-sectional view taken along the line A-A' shown in FIG. 4.

In FIGS. 4 and 5, 200 represents an electrode (e.g., including the electrode described with respect to FIGS. 1 to 3).

The electrode 200 includes a positive electrode 10 and/or a negative electrode 20.

The electrode 200 includes the substrate 210 (e.g., including the substrate 210 described in FIG. 3), an active material layer 220 (e.g., including the active material layer described in FIG. 3), and a connecting tab 240.

As described in FIG. 3, the substrate 210 may include an insulating layer 210p and a conductive layer 210m formed on at least one surface of the insulating layer 210p. For example, the conductive layer 210m may be formed on both, or opposite, surfaces of the insulating layer 210p. In an embodiment, for example, the conductive layer 210m includes a first conductive layer formed on a surface of the insulating layer 210p and a second conductive layer formed on another surface of the insulating layer 210p.

The active material layer 220 includes an active material (e.g., including the active material described with respect to FIGS. 1 and 2), a conductive material (e.g., including the conductive material described with respect to FIGS. 1 and 2), and/or a binder (e.g., including the binder described with respect to FIGS. 1 and 2).

The active material layer 220 is provided on the substrate 210. In an embodiment, for example, the active material layer 220 may be coated on a portion of the substrate 210 in a slurry state. In an embodiment, for example, the active material layer 220 may be attached to a portion of the substrate 210 in a freestanding film state.

The active material layer 220 is provided on a portion of the substrate 210. In an embodiment, for example, the active material layer 220 may be provided on a portion of one surface of the substrate 210. In an embodiment, for example, as illustrated in FIG. 5, the active material layer 220 may be provided on a portion of both, or opposite, surfaces of the substrate 210. In an embodiment, if the active material layer 220 is provided on both, or opposite, surfaces of the substrate 210, the active material layers 220 provided on both, or opposite, sides of the substrate 210 may be provided symmetrically with respect to each other with the substrate 210 as the center. However, in an embodiment, the active material layer 220 provided on a surface of the substrate 210 and the active material layer 220 provided on another surface may be provided to occupy different areas.

The active material layer 220 is provided, for example, on the conductive layer 210m. For example, the active material layer 220 may include a first active material layer formed on the first conductive layer and a second active material layer formed on the second conductive layer.

The active material layer 220 is provided on a portion of at least one surface of the substrate 210. Accordingly, another portion of the substrate 210 may be exposed to the outside without being covered by the active material layer 220. For example, the first conductive layer and the second conductive layer may be exposed to the outside. The area exposed to the outside in the substrate 210 provides a space that may be electrically connected to the outside.

As described above, the first conductive layer and the second conductive layer are insulated from each other by the insulating layer 210p. Accordingly, the first and second conductive layers are electrically connected such that the currents on these two conductive layers 210m can be combined.

The connecting tab 240 may be electrically connected to the conductive layer 210m. In an embodiment, for example, the connecting tab 240 is welded to the conductive layer 210m and connected through a welded portion 240w.

The welded portion 240w is, for example, an area where the connecting tab 240 and the substrate 210 are welded and joined. In an embodiment, the welded portion 240w is, for example, an area where two connecting tabs 240 are welded and joined. Accordingly, for example, the welded portion 240w may be formed by extending from an area where the connecting tabs 240 are provided on both, or opposite, surfaces of the substrate 210 to an area where only the connecting tabs 240 meet.

For example, the connecting tab 240 may electrically connect the first conductive layer and the second conductive layer. For example, the connecting tab 240 may include a first connecting tab coupled to one side of the first conductive layer and a second connecting tab coupled to one side of the second conductive layer. The first connecting tab is connected to the first conductive layer on one side and contacts the second connecting tab on the other side. Similarly, the second connecting tab is connected to the second conductive layer on one side and contacts the first connecting tab on the other side. Accordingly, as illustrated in FIG. 5, the first connecting tab and the second connecting tab come into contact, and the connecting tab 240 may electrically connect the first conductive layer and the second conductive layer.

Therefore, the connecting tab 240 may include a conductive material. For example, the connecting tab 240 may include a material that is the same or similar to the conductive layer 210m.

In an embodiment, the electrode 200 may further include a protective layer 230. The protective layer 230 may be formed between the active material layer 220 and the connecting tab 240. The protective layer 230 may prevent or substantially prevent the conductive layer 210m from being deformed and/or cracks from occurring in the conductive layer 210m.

The protective layer 230 may include any of suiable insulating materials. The insulating materials include, for example, aluminium trioxide, aluminium hydroxide, and the like. In an embodiment, the protective layer 230 may further include a binder.

Through this configuration, the substrate 210 can present a structure that enables electrical connection between conductive layers 210m while reducing weight.

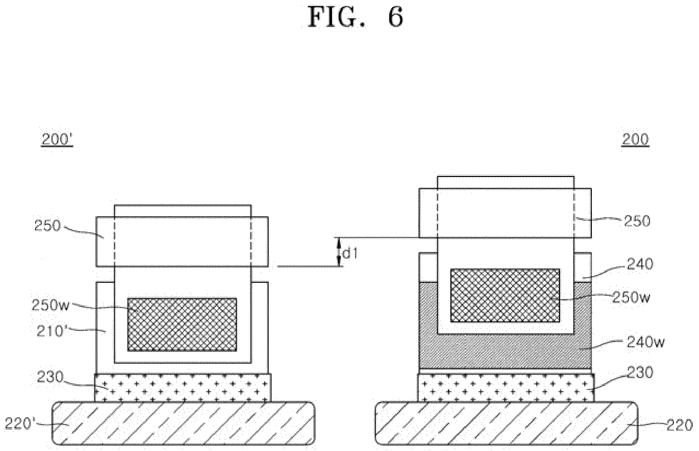

FIG. 6 is a drawing comparing an example of a lead tab attached to an electrode to which a general substrate is applied and an example of a lead tab attached to an electrode to which a composite substrate is applied.

In FIG. 6, 200' represents a conventional electrode. The conventional electrode is an electrode to which a general substrate is applied.

The conventional electrode 200' includes a substrate 210' and an active material layer 220' provided on a portion of the substrate 210'. The substrate 210' may be made of a conductive material. The conventional electrode 200' may be electrically connected to a lead tab 250. The lead tab 250 may be welded, for example, onto the substrate 210' and connected to the substrate 210' through a welded portion 250w. Herein, for the purpose of distinction from the composite substrate 210, the substrate 210' applied to the conventional electrode 200' is referred to as a general substrate.

In FIG. 6, 200 represents an electrode to which a composite substrate 210 described with respect to FIGS. 3 to 5 (e.g., including the substrate 210 described with respect to FIGS. 3 to 5) is applied. The electrode 200 may include an insulating layer 210p, a conductive layer 210m provided on at least one surface of the insulating layer 210p, and a connecting tab 240 electrically connected to the conductive layer 210m. The electrode 200 may be electrically connected to a lead tab 250. To be electrically connected to the electrode 200, the lead tab 250 may be welded onto the connecting tab 240 and connected to the substrate 210 through the welded portion 250w.

As illustrated in FIG. 6, in the electrode 200 to which the composite substrate 210 is applied, the lead tab 250 is attached on the connecting tab 240 located relatively far from the active material layer 220. This is to avoid a welded portion 250w formed to join the connecting tab 240 and the substrate 210.

According to this configuration, the electrode 200 to which the composite substrate 210 is applied has an increased bending length. For example, as illustrated in FIG. 6, the electrode 200 to which the composite substrate 210 is applied may be formed to have a bending length d1 longer than that of the conventional electrode 200' to which the general substrate 210' is applied. However, in this case, as the bending length increases, the electrode 200 to which the composite substrate 210 is applied may be difficult to apply to a thin film cell.

Therefore, measures are desired to expand a range of application of applicable thin film cells by reducing the bending length while applying the composite substrate 210 described in FIG. 3. Herein, these measures are described in further detail.

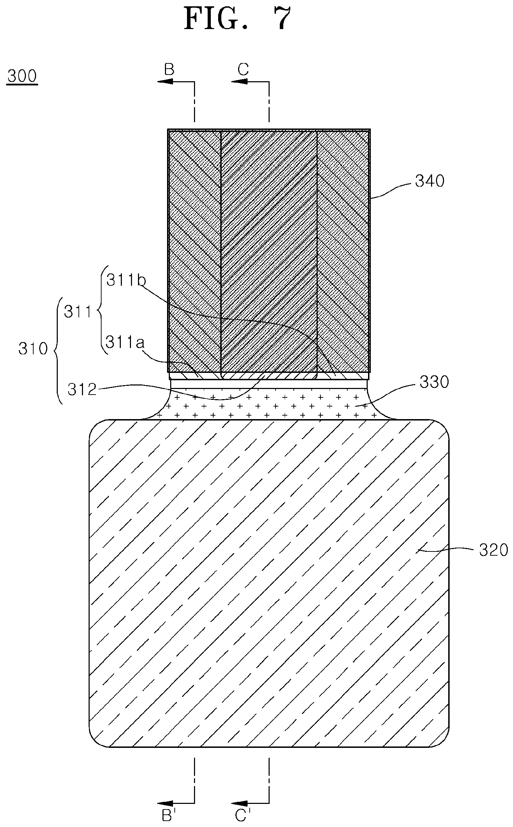

FIG. 7 is a top view showing an electrode to which a composite substrate according to one embodiment of the present invention is applied.

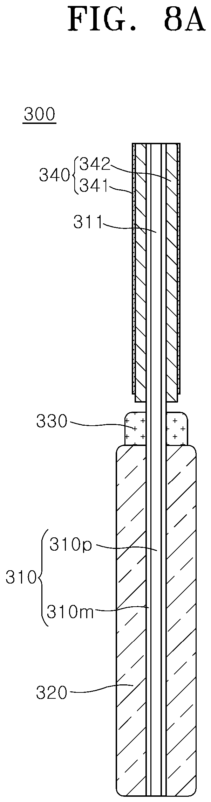

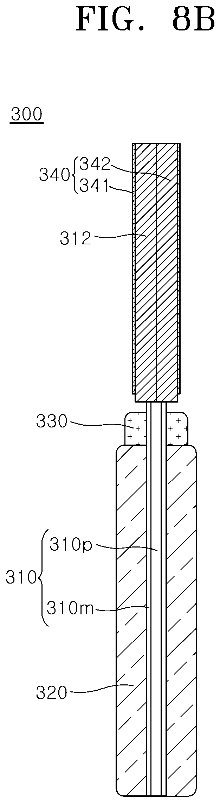

FIGS. 8A and 8B are cross-sectional views taken along the lines B-B' and C-C' shown in FIG. 7, respectively.

In FIGS. 7 to 8B, 300 represents an electrode according to an embodiment of the present invention. FIG. 8A shows a cross-sectional view of the electrode 300 taken along line B-B' of FIG. 7; and FIG. 8B shows a cross-sectional view of the electrode 300 taken along line C-C' of FIG. 7.

An electrode 300 according to an embodiment of the present invention includes a substrate 310, an active material layer 320, and a connecting tab 340.

The substrate 310 includes, for example, the composite substrate 210 described with respect to FIGS. 3 to 6.

The substrate 310 may include an insulating layer 310p (e.g., including the insulating layer 210p described with respect to FIGS. 3 to 6) and a conductive layer 310m formed on at least one surface of the insulating layer 310p (e.g., including the conductive layer 210m described with respect to FIGS. 3 to 6).

The insulating layer 310p enables a shape of the substrate 310 to be supported. The insulating layer 310p enables the substrate 310 to maintain its shape, for example, even if the conductive layer 310m is formed thinly.

In an embodiment, the insulating layer 310p may include a material having a lower density than the conductive layer 310m. Through this, the insulating layer 310p may enable weight reduction compared to if the substrate 310 is composed only of a conductive layer 310m. For example, the insulating layer 310p includes an insulating material.

In an embodiment, the insulating material may include at least one selected from the group consisting of polymer materials and polymer composite materials.

The conductive layer 310m conducts and/or collects current in the substrate 310. Through this, the conductive layer 310m provides a path for electrons to move to the active material layer 320. Accordingly, the conductive layer 310m includes a conductive material.

In an embodiment, the conductive material may be at least one selected from the group consisting of metallic materials, carbon-based materials, and combinations thereof.

The conductive layer 310m is provided on at least one surface of the insulating layer 310p. In an embodiment, for example, the conductive layer 310m may be formed on one surface of the insulating layer 310p. In an embodiment, for example, the conductive layer 310m may be formed on both, or opposite, surfaces of the insulating layer 310p. For example, the conductive layer 310m may include a first conductive layer formed on a surface of the insulating layer 310p and a second conductive layer formed on another surface of the insulating layer 310p. For example, as illustrated in FIG. 8A and/or FIG. 8B, the first conductive layer and the second conductive layer may be insulated from each other by the insulating layer 310p.

Therefore, the substrate 310 may reduce the total weight of the substrate 310 by including the insulating layer 310p that is relatively lighter than the conductive layer 310m. In addition, the substrate 310 may contribute to reducing a weight of the secondary battery 100.

Further, the substrate 310 may prevent or substantially prevent other components from penetrating the substrate 310 by including the insulating layer 310p. In an embodiment, the insulating layer 310p may have a greater elongation than the conductive layer 310m. Accordingly, the substrate 310 may improve short-circuit resistance through elongation of the insulating layer 310p located inside in a nail penetration test. In addition, the substrate 310 may improve safety by improving voltage drop and reducing resistance by including the insulating layer 310p. In an embodiment, the substrate 310 may improve the safety of the secondary battery 100.

The active material layer 320 includes, for example, the active material layer 220 described with respect to FIGS. 4 to 6.

The active material layer 320 is provided on a portion of the substrate 310.

The active material layer 320 includes an active material (e.g., including the active material described with respect to FIGS. 1 and 2), a conductive material (e.g., including the conductive material described with respect to FIGS. 1 and 2), and/or a binder (e.g., including the binder described with respect to FIGS. 1 and 2).

The active material layer 320 is provided on the substrate 310. In an embodiment, for example, the active material layer 320 may be coated on a portion of the substrate 310 in a slurry state. In an embodiment, for example, the active material layer 320 may be attached to a portion of the substrate 310 in a freestanding film state.

The active material layer 320 is provided on a portion of the substrate 310. In an embodiment, for example, the active material layer 320 may be provided on a portion of one surface of the substrate 310. In an embodiment, for example, as illustrated in FIG. 8A and/or FIG. 8B, the active material layer 320 may be provided on a portion of both, or opposite, surfaces of the substrate 310. In an embodiment, if the active material layer 320 is provided on both, or opposite, surfaces of the substrate 310, the active material layers 320 provided on both, or opposite, sides of the substrate 310 may be provided symmetrically with respect to each other with the substrate 310 as the center. However, in an embodiment, the active material layer 320 provided on a surface of the substrate 310 and the active material layer 320 provided on another surface of the substrate 310 may be provided to occupy different areas.

The active material layer 320 is provided, for example, on the conductive layer 310m. For example, the active material layer 320 may include a first active material layer formed on the first conductive layer and a second active material layer formed on the second conductive layer.

The active material layer 320 is provided on a portion of at least one surface of the substrate 310. Accordingly, another portion of the substrate 310 may be exposed to the outside without being covered by the active material layer 320. For example, a portion of the first and second conductive layers may be covered by the active material layer 320, while the other portion may be exposed to the outside. The area exposed to the outside in the substrate 310 provides a space that may be electrically connected to the outside.

As described above, the first conductive layer and the second conductive layer are insulated from each other by the insulating layer 310p. Accordingly, the first and second conductive layers are electrically connected such that the currents on these two conductive layers 310m can be combined.

The connecting tab 340 may be electrically connected to the conductive layer 310m. In an embodiment, for example, the connecting tab 340 is welded to the conductive layer 310m and connected through a welded portion 350w.

For example, the connecting tab 340 may electrically connect the first conductive layer and the second conductive layer. For example, the connecting tab 340 may include a first connecting tab coupled to one side of the first conductive layer and a second connecting tab coupled to one side of the second conductive layer. The first connecting tab is connected to the first conductive layer on one side and contacts the second connecting tab on the other side. Similarly, the second connecting tab is connected to the second conductive layer on one side and contacts the first connecting tab on the other side. Accordingly, as illustrated in FIG. 8A and/or FIG. 8B, the first connecting tab and the second connecting tab come into contact, and the connecting tab 340 may electrically connect the first conductive layer and the second conductive layer.

Therefore, the connecting tab 340 may include a conductive material. For example, the connecting tab 340 may include a material that is the same or similar to the conductive layer 310m.

In an embodiment, the electrode 300 may further include a protective layer 330. The protective layer 330 may be formed between the active material layer 320 and the connecting tab 340. The protective layer 330 may prevent or substantially prevent the conductive layer 310m from being deformed and/or cracks from occurring in the conductive layer 310m.

The protective layer 330 may include any of suitable insulating materials. In an embodiment, the insulating materials include, for example, aluminium trioxide, aluminium hydroxide, and the like. In an embodiment, the protective layer 330 may further include a binder.

The electrode 300 according to an embodiment of the present invention includes a substrate tab area to avoid the problem described with respect to FIG. 6.

Before explaining the substrate tab area, the shape of the substrate 310 according to an embodiment of the present invention will be described by way of example. As described above, an active material layer 320 is formed on a portion of the substrate 310, and another portion of the substrate 310 is exposed to the outside.

When viewed from above as in FIG. 7, the other portion of the substrate 310 may be formed with a different width from a portion of the substrate 310. For convenience of explanation, a portion of the substrate 310 on which the active material layer 320 is provided is referred to as a coated portion, and the other portion of the substrate 310 on which the active material layer 320 is not provided is referred to as an uncoated portion.

For example, the uncoated portion is formed by extending from the coated portion in a direction away from the active material layer 320. In an embodiment, the uncoated portion may be formed by being partially notched. Accordingly, when viewed from above, the total width of the uncoated portion is less than the width of the coated portion.

In an embodiment, for example, the uncoated portion may be formed in a shape that protrudes from the coated portion in a direction away from the active material layer 320 by notching. For example, the uncoated portion may be formed in one or more protruding shapes from the coated portion.

Accordingly, the connecting tab 340 can form, or define, a substrate tab area by surrounding another portion of the substrate 310. The connecting tab 340 can form, or define, a substrate tab area by surrounding the substrate 310 and the surrounding area of the substrate 310. In an embodiment, the substrate tab area may extend in a direction away from the active material layer 320

That is, the substrate tab area includes the area surrounded by the connecting tab 340 including not only the uncoated portion but also the area surrounding the uncoated portion. Accordingly, the substrate tab area may include a mixed area 311 and a single area 312. A further detailed description of the substrate tab area is provided below.

As shown in FIGS. 7 and 8A, the mixed area 311 includes the substrate 310 and the connecting tab 340. That is, the mixed area 311 may be formed as the connecting tab 340 surrounds another portion of the substrate 310.

The connecting tab 340 includes, for example, a first connecting tab 341 that surrounds a surface of the substrate 310 and a second connecting tab 342 that surrounds another surface of the substrate 310. The first connecting tab 341 and the second connecting tab 342 may be connected at a side of the substrate 310. That is, the first connecting tab 341 and the second connecting tab 342 may be one connecting tab 340.

Accordingly, for example, the mixed area 311 may include the substrate 310, the first connecting tab 341, and the second connecting tab 342. For example, the mixed area 311 may include the substrate 310, the first connecting tab 341 provided on a surface of the substrate 310, and the second connecting tab 342 provided on the other surface of the substrate 310. In an embodiment, the first connecting tab 341 may define one surface of the substrate tab area, and the second connecting tab 342 may define another surface of the substrate tab area.

As shown in FIGS. 7 and 8B, the single area 312 includes the connecting tab 340. That is, the single area 312 may be formed as the connecting tab 340 surrounds a surrounding area of the substrate 310.

Accordingly, for example, the single area 312 may include the first connecting tab 341 and the second connecting tab 342. For example, the single area 312 may be formed when the first connecting tab 341 and the second connecting tab 342 come into contact

In this way, the electrode 300 according to an embodiment of the present invention includes a substrate tab area including the mixed area 311 and the single area 312. This allows the electrode 300 to expand a range of an area in which a lead tab may be welded to the electrode 300. For example, the electrode 300 may be welded such that the lead tab is closer to the active material layer 320, thereby reducing a bending length.

However, a shape of the electrode 300 according to the present invention is not limited to the shape of the electrode 300 illustrated in FIGS. 7 to 8B. That is, the electrode 300 includes all types of electrodes including a substrate tab area. Therefore, the electrodes 300 described through FIGS. 7 to 15 are merely examples included in various embodiments of the present invention.

For example, the electrode 300 according to an embodiment of the present invention may include the substrate tab area. The substrate tab area may include the mixed area 311 and the single area 312.

In an embodiment, as shown in FIGS. 7 to 8B, the mixed area 311 may include a first mixed area 311a and a second mixed area 311b. One side of the first mixed area 311a is located close to the active material layer 320, and another side of the first mixed area 311a is located far from the active material layer 320. One side of the second mixed area 311b is located close to the active material layer 320, and another side of the second mixed area 311b is located far from the active material layer 320. In an embodiment, the first mixed area 311a and the second mixed area 311b are located spaced apart from each other.

As shown in FIGS. 7 to 8B, the single area 312 may be formed on a side of the first mixed area 311a. In addition, the single area 312 may be formed on a side of the second mixed area 311b. In addition, the single area 312 may be formed between the first mixed area 311a and the second mixed area 311b.

In an embodiment, unlike as shown in FIGS. 7 to 8B, the single area 312 may be formed on the other side of the first mixed area 311a and/or the other side of the second mixed area 311b.

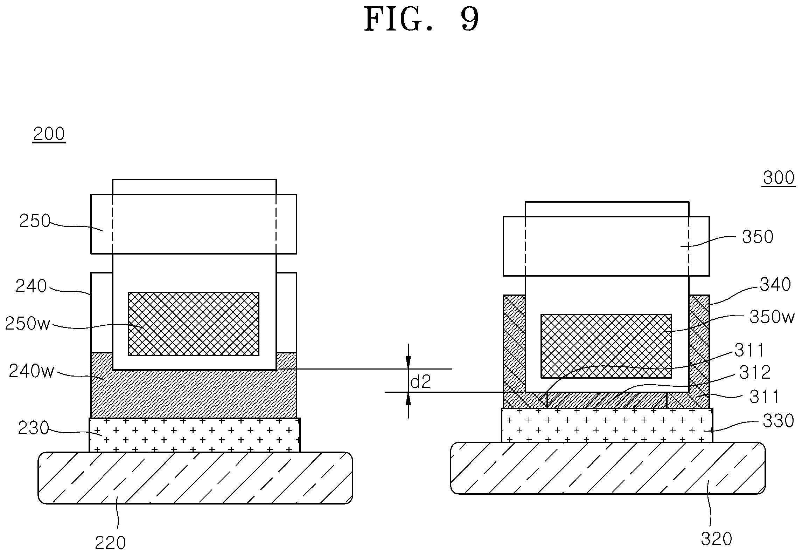

Through this structure, the electrode 300 according to an embodiment of the present invention can provide a wider area to which the lead tab can be attached. An example of this is described with respect to FIG. 9.

FIG. 9 is a drawing comparing an example of a lead tab attached to an electrode to which a composite substrate is applied and an example of a lead tab attached to an electrode to which a composite substrate according to an embodiment of the present invention is applied.

In FIG. 9, 200 represents an electrode to which the composite substrate 210 described with respect to FIGS. 3 to 5 is applied.

The electrode 200 includes an insulating layer 210p, a conductive layer 210m provided on at least one surface of the insulating layer 210p, and a connecting tab 240 electrically connected to the conductive layer 210m. The electrode 200 may be electrically connected to a lead tab 250. To be electrically connected to the electrode 200, the lead tab 250 may be welded onto the connecting tab 240 and connected to the substrate 210 through the welded portion 250w.

In FIG. 9, 300 represents an electrode according to an embodiment of the present invention described with respect to FIGS. 7 to 8B.

The electrode 300 includes an insulating layer 310p, a conductive layer 310m provided on at least one surface of the insulating layer 310p, and a connecting tab 340 that surrounds the composite substrate 310 and forms a substrate tab area. The electrode 300 may be electrically connected to a lead tab 350. To be electrically connected to the electrode 300, the lead tab 350 may be welded onto the connecting tab 340 and connected to the substrate 310 through a welded portion 350w.

As illustrated in FIG. 9, in the electrode 200, the lead tab 250 is attached on the connecting tab 240 located relatively far from the active material layer 220.

On the other hand, as illustrated in FIG. 9, in the electrode 300, the lead tab 350 is attached on the connecting tab 340 located relatively close to the active material layer 320. This is because the area where the lead tab 350 can be attached to the electrode 300 has been expanded by the substrate tab area. For example, a mixed area 311 allows the substrate 310 and the connecting tab 340 to be welded over a relatively wide area. Accordingly, the mixed area 311 may improve the welding strength between the substrate 310 and the connecting tab 340. In addition, for example, the single area 312 may secure a relatively wide area in which the lead tab 350 may be welded. Accordingly, the single area 312 enables the secondary battery 100 including the electrode 300 and the lead tab 350 to have a reduced bending length. For example, the single area 312 can reduce the bending length by d2.

The lead tab 350 may be welded onto the substrate tab area by, for example, ultrasonic welding or laser welding. For example, the lead tab 350 may be welded by forming the single area 312 and the welded portion 350w.

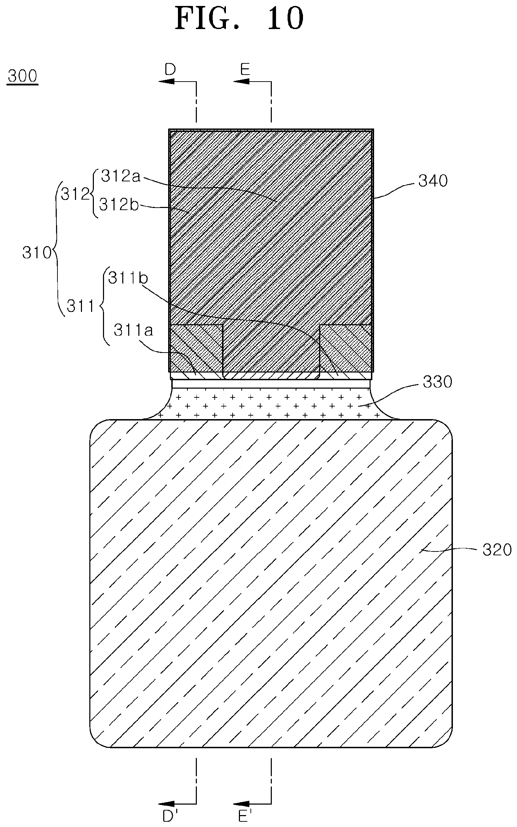

FIG. 10 is a top view showing an electrode to which a composite substrate according to another embodiment of the present invention is applied.

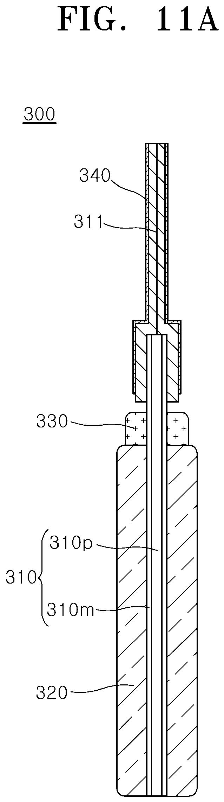

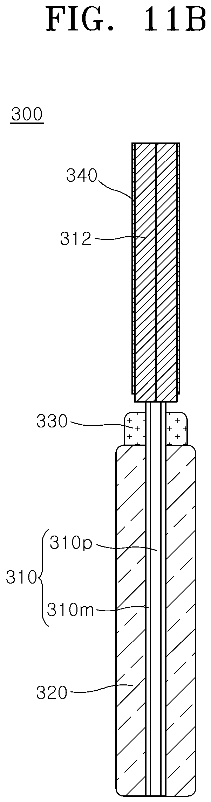

FIG. 11A and 11B are cross-sectional views taken along the lines D-D' and E-E' shown in FIG. 10, respectively.

In FIGS. 10 to 11B, 300 represents an electrode according to an embodiment of the present invention. FIG. 11A shows a cross-sectional view of the electrode 300 taken along the line D-D' of FIG. 10; and FIG. 11B shows a cross-sectional view of the electrode 300 taken along the line E-E' of FIG. 10.

An electrode 300 according to another embodiment of the present invention includes a substrate 310, an active material layer 320, and a connecting tab 340.

The substrate 310 includes, for example, the composite substrate 210 described with respect to FIGS. 3 to 6 or the substrate 310 described with respect to FIGS. 7 to 9.

The substrate 310 may include an insulating layer 310p (e.g., including the insulating layer 210p described with respect to FIGS. 3 to 6 and the insulating layer 310p described with respect to FIGS. 7 to 9) and a conductive layer 310m formed on at least one surface of the insulating layer 310p (e.g., including the conductive layer 210m described with respect to FIGS. 3 to 6 and the conductive layer 310m described with respect to FIGS. 7 to 9).

The active material layer 320 includes, for example, the active material layer 220 described with respect to FIGS. 3 to 6 or the active material layer 320 described with respect to FIGS. 7 to 9.

The active material layer 320 is provided on a portion of at least one surface of the substrate 310.

The connecting tab 340 can form a substrate tab area by surrounding another portion of the substrate 310. The connecting tab 340 can form a substrate tab area by surrounding the substrate 310 and the surrounding area of the substrate 310.

The substrate tab area may include a mixed area 311 and a single area 312.

In an embodiment, the single area 312 may include a main body 312a and a wing 312b. The main body 312a corresponds to the single area 312 described, for example, with respect to FIGS. 7 to 9. The main body 312a is formed to extend in a direction away from the active material layer 320. The wing 312b is formed to protrude from at least one side of the main body 312a.

The mixed area 311 is formed by extending from the active material layer 320 toward the single area 312. For example, the mixed area 311 is formed by extending from the active material layer 320 toward the wing 312b.

In an embodiment, the single area 312 is an area formed by the connecting tab 340, and a size and shape of the main body 312a and the wing 312b may be set by a size and/or shape of the substrate 310 included in the mixed area 311.

For example, as illustrated in FIG. 10, the mixed area 311 may include a first mixed area 311a and a second mixed area 311b that are formed spaced apart from each other. The first mixed area 311a and the second mixed area 311b may be formed by extending a distance (e.g., a predetermined distance) from the active material layer 320. The distance (e.g., the predetermined distance) may be a minimum distance required for the first mixed area 311a and the second mixed area 311b.

Accordingly, the mixed area 311 may be formed relatively narrower than the mixed area 311 described in FIGS. 7 to 8B.

Accordingly, the connecting tab 340 may be formed to surround not only the side of the substrate 310 but also the front of the substrate 310. Accordingly, when the connecting tab 340 surrounds the area formed on the side of the first mixed area 311a and the second mixed area 311b or surrounds the area extending therefrom, this area may be formed as the main body 312a. In addition, when the connecting tab 340 surrounds an area formed in front of the first mixed area 311a and/or the second mixed area 311b, this area may be formed as a wing 312b.

FIG. 10 shows a feature in which the electrode 300 according to an embodiment of the present invention includes two mixed areas. However, the electrode 300 may include one mixed area 311 or may include three mixed areas, for example formed spaced apart from each other. For example, if the electrode 300 includes one mixed area, the single area 312 may include one main body and one wing. For example, the single area 312 may include two main bodies and one wing formed between the two main bodies. For example, if the electrode 300 includes three mixed areas, the single area 312 may include two main bodies and three wings, and the three wings may be located on the outer side of each of the two main bodies and between the two main bodies.

The mixed area 311 may be, for example, formed by extending a distance (e.g., a predetermined distance) or more from the active material layer 320 to the single area 312. In an embodiment, the distance (e.g., the predetermined distance) is a minimum distance between the connecting tab 340 and the substrate 310 to secure welding strength. In an embodiment, the distance (e.g., the predetermined distance) is, for example, 1.0 mm or more. In an embodiment, the distance (e.g., the predetermined distance) is, for example, 1.1 mm or more. In an embodiment, the distance (e.g., the predetermined distance) is, for example, 1.2 mm or more. In an embodiment, the distance (e.g., the predetermined distance) is, for example, 1.3 mm or more. In an embodiment, the distance (e.g., the predetermined distance) is, for example, 1.4 mm or more. In an embodiment, the distance (e.g., the predetermined distance) is, for example, 1.5 mm or more. If the above distance is exceeded, the welding strength between the connecting tab 340 and the substrate 310 may be weakened, causing the connecting tab 340 and the substrate 310 to separate. Therefore, in an embodiment, the mixing area 311 is formed by extending a distance (e.g., the predetermined distance) or more.

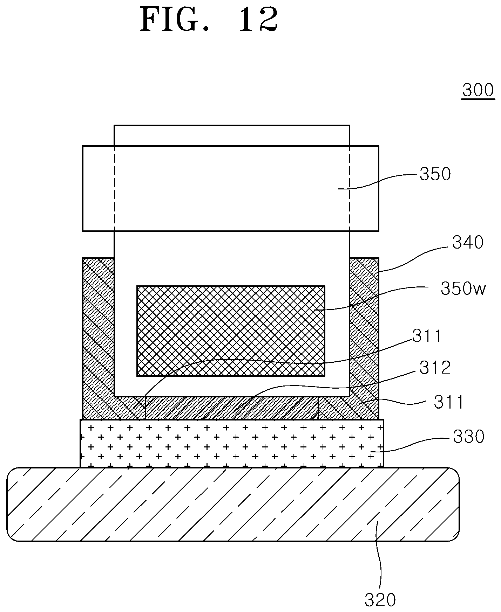

FIG. 12 is a top view showing an example of a lead tab attached to an electrode according to another embodiment of the present invention.

In FIG. 12, 300 represents an electrode according to another embodiment of the present invention described with respect to FIGS. 10 and 11A and 11B.

The electrode 300 may include an insulating layer 310p, a conductive layer 310m provided on at least one surface of the insulating layer 310p, and a connecting tab 340 that surrounds the substrate 310 and forms a substrate tab area. The electrode 300 may be electrically connected to a lead tab 350. In an embodiment, to be electrically connected to the electrode 300, the lead tab 350 may be welded onto the connecting tab 340 and connected to the substrate 310 through the welded portion 350w.

As shown in FIG. 12, the electrode 300 forms a single area 312 having a relatively wide area. Accordingly, a lead tab 350 may have a relatively wider area that may be welded to the electrode 300.

Accordingly, the electrode 300 according to an embodiment of the present invention may improve the welding strength with the lead tab 350. In addition, the electrode 300 can further contribute to reducing a weight of the secondary battery 100 by further reducing a weight of the substrate 310.

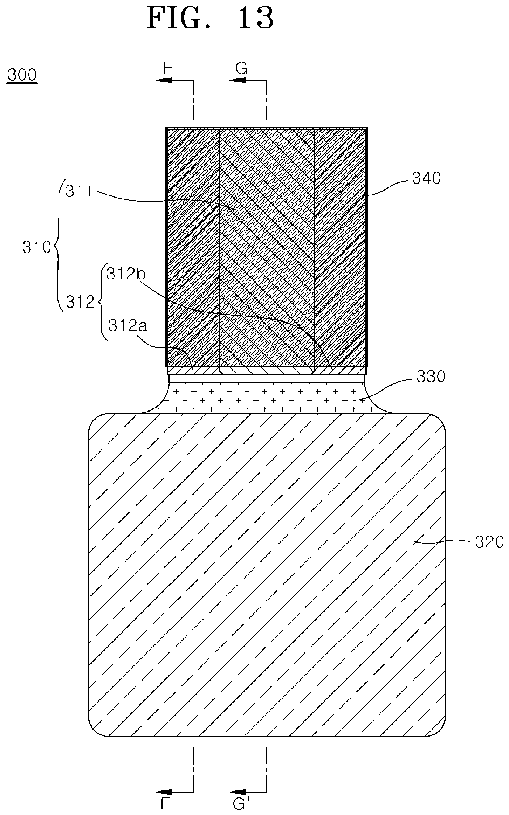

FIG. 13 is a top view showing an electrode to which a composite substrate according to another embodiment of the present invention is applied.

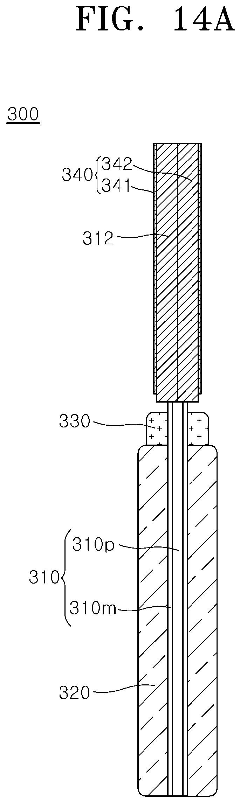

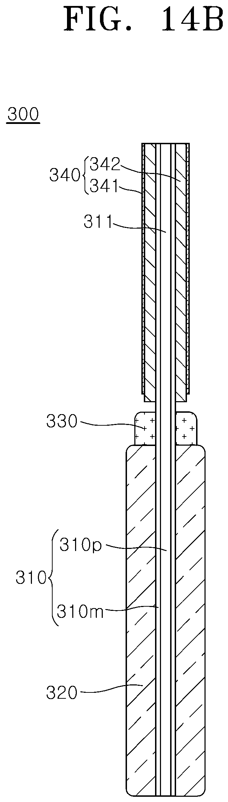

FIG. 14A and 14B are cross-sectional views taken along the lines F-F' and G-G' shown in FIG. 13, respectively.

In FIGS. 13 to 14B, 300 represents an electrode according to another embodiment of the present invention. FIG. 14A shows a cross-sectional view of the electrode 300 taken along the line F-F' of FIG. 13; and FIG. 14B shows a cross-sectional view of the electrode 300 taken along the line G-G' of FIG. 13.

An electrode 300 according to another embodiment of the present invention includes a substrate 310, an active material layer 320, and a connecting tab 340.

The substrate 310 includes, for example, the composite substrate 210 described with respect to FIGS. 3 to 6 or the substrate 310 described with respect to FIGS. 7 to 12.

The substrate 310 includes an insulating layer 310p (e.g., including the insulating layer 210p described with respect to FIGS. 3 to 6 and the insulating layer 310p described with respect to FIGS. 7 to 12) and a conductive layer 310m formed on at least one surface of the insulating layer 310p (e.g., including the conductive layer 210m described with respect to FIGS. 3 to 6 and the conductive layer 310m described with respect to FIGS. 7 to 12).

The active material layer 320 includes, for example, the active material layer 220 described with respect to FIGS. 3 to 6 or the active material layer 320 described with respect to FIGS. 7 to 12.

The active material layer 320 is provided on a portion of at least one surface of the substrate 310.

The connecting tab 340 can form a substrate tab area by surrounding another portion of the substrate 310. The connecting tab 340 can form a substrate tab area by surrounding the substrate 310 and the surrounding area of the substrate 310.

The substrate tab area may include a mixed area 311 and a single area 312.

In an embodiment, the single area 312 may include a first single area 312a and a second single area 312b formed spaced apart from the first single area 312a. In an embodiment, the mixed area 311 may be formed between the first single area 312a and the second single area 312b.

Through this structure, the electrode 300 according to an embodiment of the present invention can enable the substrate 310 and the connecting tab 340 to have stable welding strength.

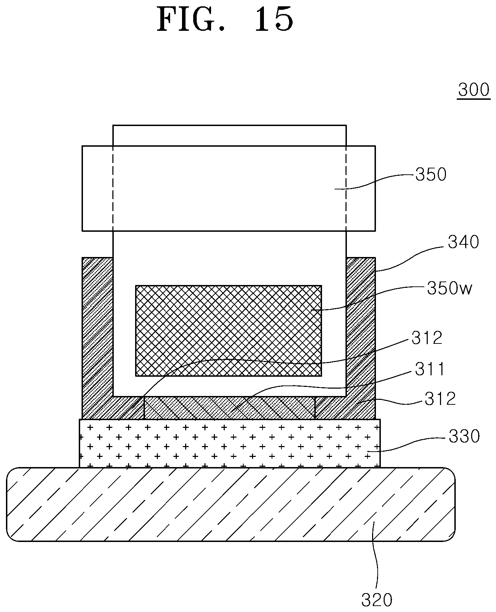

FIG. 15 is a top view showing an example of a lead tab attached to an electrode according to another embodiment of the present invention.

In FIG. 15, 300 represents an electrode according to one embodiment of the present invention described in FIGS. 13 and 14A and 14B.

The electrode 300 may include an insulating layer 310p, a conductive layer 310m provided on at least one surface of the insulating layer 310p, and a connecting tab 340 that surrounds the composite substrate 310 and forms a substrate tab area. The electrode 300 may be electrically connected to a lead tab 350. In an embodiment, to be electrically connected to the electrode 300, the lead tab 350 may be welded onto the connecting tab 340 and connected to the substrate 310 through the welded portion 350w.

In an embodiment, as illustrated in FIG. 15, the electrode 300 forms a single area 312 on both, or opposite, edge sides in the substrate tab area. Accordingly, the lead tab 350 may be welded by forming the welded portion 350w on the area where the center of the lead tab 350 and the single area 312 overlap. In an embodiment, unlike as shown in FIG. 15, the lead tab 350 may be welded by forming an 11-shaped weld in which welded portions are spaced apart from each other between the edge of the lead tab 350 and the single area 312. In this way, by the single area 312, the lead tab 350 may be electrically connected to the substrate 310 even when joined on the mixed area 311. Accordingly, the electrode 300 can provide a more flexible area to which the lead tab 350 may be welded.

Accordingly, the electrode 300 according to an embodiment of the present invention may improve the welding strength with the lead tab 350. In addition, the electrode 300 can further contribute to reducing a weight of the secondary battery 100 by further reducing a weight of the substrate 310.

In an embodiment, the secondary battery (100, see FIGS. 1 and 2) according to an embodiment of the present invention includes an electrode assembly (40, see FIGS. 1 and 2) and a case that accommodates the electrode assembly 40.

The electrode assembly 40 includes the electrode 300. The electrode 300 includes a negative electrode 20 and/or a positive electrode 10. The electrode 300 includes a substrate 310 (e.g., including the substrate 210 of FIGS. 3 to 6 and the substrate 310 of FIGS. 7 to 15), an active material layer 320 (e.g., including the active material layer 220 of FIGS. 4 to 6 and the active material layer 320 of FIGS. 7 to 15), and a connecting tab 340 (e.g., including the connecting tab 240 of FIGS. 4 to 6 and the connecting tab 340 of FIGS. 7 to 15).

In addition, the secondary battery 100 may further include a lead tab 350 (e.g., including the lead tab 350 of FIGS. 9, 12, and 15) electrically connected to the connecting tab 340 and having at least a portion exposed outside the case.

According to embodiments of the present invention, an electrode and/or a secondary battery with reduced weight can be provided.

According to embodiments of the present invention, an electrode and/or a secondary battery including a composite substrate capable of efficient electrical connection can be provided.

According to embodiments of the present invention, an electrode and/or a secondary battery having a reduced bending length in a substrate tab area can be provided.

According to embodiments of the present invention, an electrode and/or a secondary battery that can expand the scope of application to thin film cells can be provided.

However, aspects and effects obtainable through the present invention are not limited to the aspects and effects described above, and other technical aspects and effects not mentioned will be clearly understood by those skilled in the art from the description of the invention.

Although the present invention has been described above with respect to some example embodiments and drawings, the present invention is not limited thereto, and various modifications and variations can be made by those skilled in the art to which the present invention pertains within the scope of the technical idea of the present invention and the equivalent scope of the claims.

## Claims

1. An electrode comprising:
a substrate;
an active material layer on a portion of the substrate; and
a connecting tab defining a substrate tab area by surrounding another portion of the substrate.

2. The electrode as claimed in claim 1, wherein
the substrate comprises: an insulating layer; and a conductive layer comprising a first conductive layer on a surface of the insulating layer, and a second conductive layer on another surface of the insulating layer; and
the connecting tab electrically connects the first conductive layer and the second conductive layer.

3. The electrode as claimed in claim 2, wherein the connecting tab comprises a same material as the conductive layer.

4. The electrode as claimed in any one of claims 1 to 3, wherein the substrate tab area extends toward the outside from the active material layer.

5. The electrode as claimed in any one of claims 1 to 4, wherein the substrate tab area comprises: a mixed area including the substrate and the connecting tab; and a single area including the connecting tab.

6. The electrode as claimed in claim 5, wherein the mixed area includes: the substrate; a first connecting tab on a surface of the substrate and defining a surface of the substrate tab area; and a second connecting tab on another surface of the substrate and defining another surface of the substrate tab area.

7. The electrode as claimed in claim 5 or claim 6, wherein the single area is formed by bringing a first connecting tab formed on the surface of the substrate tab area into contact with a second connecting tab formed on the another surface of the substrate tab area.

8. The electrode as claimed in any one of claims 5 to 7, wherein
the mixed area includes: a first mixed area; and a second mixed area spaced apart from the first mixed area, and
the single area is between the first mixed area and the second mixed area.

9. The electrode as claimed in any one of claims 5 to 7, wherein
the single area includes: a main body; and a wing protruding from at least one side of the main body; and
the mixed area extends from the active material layer toward the single area.

10. The electrode as claimed in any one of claims 5 to 7, wherein
the single area includes: a first single area; and a second single area spaced apart from the first single area, and
the mixed area is between the first single area and the second single area.

11. A secondary battery comprising:
an electrode assembly comprising an electrode comprising: a substrate; an active material layer on a portion of the substrate; and a connecting tab defining a substrate tab area by surrounding another portion of the substrate; and
a case accommodating the electrode assembly.

12. The secondary battery as claimed in claim 11, wherein
the substrate comprises: an insulating layer; and a conductive layer comprising a first conductive layer on a surface of the insulating layer, and a second conductive layer on another surface of the insulating layer; and
the connecting tab electrically connects the first conductive layer and the second conductive layer.

13. The secondary battery as claimed in claim 12, wherein the connecting tab comprises a same material as the conductive layer.

14. The secondary battery as claimed in any one of claims 11 to 13, wherein the substrate tab area comprises: a mixed area including the substrate and the connecting tab; and a single area including the connecting tab.

15. The secondary battery as claimed in any one of claims 11 to 14, further comprising a lead tab electrically connected to the connecting tab and having at least a portion exposed outside the case.
